# EUROPÄISCHE PATENTSCHRIFT

(11) **EP 4 025 808 B1**
(45) Veröffentlichungstag und Bekanntmachung des Hinweises auf die Patenterteilung: **23.08.2023**
(21) Anmeldenummer: 20761831.5
(22) Anmeldetag: 26.08.2020
(51) Int. Cl.: F16H 59/08, F16H 61/24, F16H 61/22

(54) **WÄHLHEBELANORDNUNG ZUM ANWÄHLEN UND SCHALTEN VON VERSCHIEDENEN FAHRMODI BEI EINEM FAHRZEUGGETRIEBE**
SELECTOR LEVER ASSEMBLY FOR SELECTING AND SWITCHING DIFFERENT DRIVING MODES IN A VEHICLE TRANSMISSION
DISPOSITIF DE LEVIER DE SÉLECTION PERMETTANT LA SÉLECTION ET LE CHANGEMENT ENTRE DIFFÉRENTS MODES DE CONDUITES POUR UNE BOÎTE DE VITESSES DE VÉHICULE

(30) Priorität: 06.09.2019 DE 102019213549
(43) Veröffentlichungstag der Anmeldung: 13.07.2022
(73) Patentinhaber: ZF Friedrichshafen AG, 88046 Friedrichshafen (DE)
(72) Erfinder: BODE, Carsten, 49356 Diepholz (DE); WIEGMANN, Melanie, 49356 Diepholz (DE); SZEKERES-KRISELIUS, Jan, 49448 Lemförde (DE)
(86) Internationale Anmeldenummer: PCT/EP2020/073850
(87) Internationale Veröffentlichungsnummer: WO 2021/043647

(56) Entgegenhaltungen:
- DE-A1-102012 219 803
- JP-A- H03 282 056
- JP-A- H11 306 917
- KR-A- 20120 139 881
- US-A1- 2016 245 396
- US-B2- 9 291 259

## Beschreibung

Die vorliegende Erfindung betrifft eine Wählhebelanordnung zum Anwählen und Schalten von verschiedenen Fahrmodi bei einem Fahrzeuggetriebe gemäß der im Oberbegriff des Patentanspruches 1 näher definierten Art.

Eine Wählhebelanordnung der eingangs genannten Art ist beispielsweise aus der JP H11 306917 A bekannt. Ähnliche Wählhebelanordnungen werden auch in den US 9 291 259 B2 und JP H03 282056 A offenbart.

Wählhebelanordnungen zum Anwählen und Schalten von Fahrmodi bei einem Fahrzeuggetriebe sind aus der Fahrzeugtechnik hinreichend bekannt. Üblicherweise umfasst die Wählhebelanordnung einen drehbar in einem Gehäuse gelagerten Drehschalter, dem die Fahrmodi über den Drehwinkelbereich zugeordnet sind, sodass die Fahrmodi durch das Verdrehen des Drehschalters anwählbar sind. Üblicherweise sind die verschiedenen Fahrmodi durch eine von dem Fahrer erfassbare Rastierung voneinander getrennt. Darüber hinaus ist vorgesehen, dass bestimmte Fahrmodi in bestimmten Fahrsituationen gesperrt sind, dies wird bei der Wählhebelanordnung durch eine entsprechende Sperrkontur ermöglicht.

Beispielsweise aus der Druckschrift US 9 810 314 B2 ist eine Schaltanordnung zum Wechseln von Gängen bei einem Fahrzeuggetriebe bekannt. Mit einem Drehschalter der Schaltanordnung können verschiedene Fahrmodi bei dem Fahrzeuggetriebe angewählt werden. Beispielsweise gibt es als Fahrmodus die Parkstellung, die Neutralstellung, die Rückwärtsgangstellung, den automatischen Fahrmodus und auch einen manuellen Fahrmodus sowie einen Sportfahrmodus. Diese verschiedenen Fahrmodi sind über den Drehschalter anwählbar.

Die bekannte Schaltanordnung umfasst hierzu einen Drehknopf zum Betätigen durch den Fahrer zum Einstellen der verschiedenen Fahrmodi. Der Drehknopf ist an einer Schaltwelle über eine Keilverzahnung drehfest angeordnet, sodass die Drehbewegung des Drehknopfes auf die Schaltwelle übertragen wird. Durch die Drehbewegung der Schaltwelle wird der entsprechende Fahrmodus von der in einem Gehäuse gelagerten Schaltwelle an ein Steuergerät des Fahrzeuggetriebes übertragen. Auf der Schaltwelle zudem ist eine Rastierscheibe über eine weiterer Keilverzahnung drehfest verbunden. Der Außenumfang der Rastierscheibe weist eine Vielzahl von Zähnen auf, die von einem Rastierstift abgetastet werden, um bei der Drehbewegung entsprechende Rastierungen zu simulieren. Ferner ist an der Schaltwelle eine Sperrscheibe drehfest angeordnet. Die Sperrscheibe umfasst mehrere Sperrausnehmungen, in die entsprechende Sperrstifte eingreifen können, um die Drehbewegung der Schaltwelle in bestimmten Drehwinkeln sperren zu können. Die Sperrstifte sind in dem Gehäuse ortsfest angeordnet.

Der vorliegenden Erfindung liegt die Aufgabe zugrunde, eine Wählhebelanordnung der eingangs beschriebenen Gattung weiter zu verbessern.

Diese Aufgabe wird erfindungsgemäß durch die Merkmale des Patentanspruches 1 gelöst, wobei sich vorteilhafte und beanspruchte Weiterbildungen aus den Unteransprüchen und der Beschreibung sowie den Zeichnungen ergeben.

Somit wird zunächst eine Wählhebelanordnung zum Anwählen und Schalten von verschiedenen Fahrmodi bei einem Fahrzeuggetriebe mit einem Drehknopf vorgeschlagen, der mit einem in einem Gehäuse gelagerten Wellenelement oder dergleichen verbunden ist. Die verschiedenen Fahrmodi sind dem Drehwinkelbereich des Wellenelements zugeordnet und jeweils durch eine Rastierkontur für einen Fahrer wahrnehmbar voneinander getrennt und wobei die Drehbewegung des Drehschalters über eine Sperrkontur sperrbar ist. Um die Funktionalität der erfindungsgemäßen Wählhebelanordnung zu erweitern, ist vorgesehen, dass das Wellenelement mit einem Scheibenelement drehfest, jedoch axial verschiebbar zum Aktivieren und Deaktivieren zumindest eines weiteren Funktionsmodus gekoppelt ist.

Auf diese Weise wird bei der vorgeschlagenen Wählhebelanordnung eine funktionelle Erweiterung und zudem eine Vereinfachung der Bedienung realisiert, da beispielsweise durch das Drehen zunächst ein vorbestimmter Fahrmodus einstellbar ist, während durch das zusätzliche axiale Drücken dem sogenannten tip down ein zusätzlicher Funktionsmodus realisierbar ist. Beispielsweise kann in dem normalen Fahrmodus durch das Drücken zum Beispiel ein Sportmodus aktiviert und durch nochmaliges Drücken wieder deaktiviert werden. Es sind auch andere Funktionen durch das axiale Bewegen des Drehknopfes möglich. Dieses Bedienkonzept bei der vorgeschlagenen Wählhebelanordnung ist intuitiver und kann konstruktiv einfach realisiert werden.

Weiterhin wird erfindungsgemäß ein besonders kompakter Aufbau bei der vorgeschlagenen Wählhebelanordnung dadurch erreicht, dass das Scheibenelement einerseits die Rastierkontur und andererseits die Sperrkontur aufnimmt. Auf diese Weise werden beide Funktionen in ein Bauteil integriert. Dabei ist als Rastierkontur eine an dem Umfangsbereich des Scheibenelementes axial vorstehende wellenförmige Ringkontur vorgesehen ist.

Die konstruktive Ausführung der Rastierkontur und der Sperrkontur sind dabei derart ausgeführt, dass eine Rastierung und eine Sperrung der Drehbewegung des Wellenelements ermöglicht werden.

Ein besonders konstruktiv einfacher Aufbau kann dadurch realisiert werden, dass das Wellenelement und das Scheibenelement koaxial zueinander angeordnet sind. Beispielsweise kann das Wellenelement über eine Keilverzahnung oder dergleichen axial verschiebbar und drehfest mit dem Scheibenelement verbunden werden. Es sind auch andere Verbindungen denkbar, die ein möglichst geringes radiales Spiel zum Übertragen der Drehbewegung auf das Scheibenelement realisieren und gleichzeitig eine axiale Bewegung des Wellenelements bezogen auf das Scheibenelement in dem Gehäuse zulassen.

Um die Bedienung der vorgeschlagenen Wählhebelanordnung weiter zu optimieren, kann im Rahmen einer nächsten Weiterbildung vorgesehen sein, dass axial zwischen einem Bund oder einer scheibenförmigen Anformung des Wellenelements und des Scheibenelements ein Haptikelement oder dergleichen zum Erzeugen einer entsprechenden Haptik und zum Rückstellen der Axialbewegung des Wellenelements vorgesehen ist. Durch die Verwendung des Haptikelements wird dem Fahrer beim Niederdrücken des Drehknopfes eine entsprechende haptische Rückmeldung gegeben, damit er die Aktivierung beziehungsweise Deaktivierung des vorgesehenen Funktionsmodus wahrnehmen kann. Grundsätzlich könnte hierfür ein elastisches Element, wie zum Beispiel eine Feder oder dergleichen verwendet werden. Eine besonders vorteilhafte Ausführung der Erfindung sieht vor, dass als Haptikelement eine Silikonschaltplatte oder dergleichen vorgesehen ist.

Um die Anwahl und das Schalten der verschiedenen Fahrmodi und auch das Aktivieren und Deaktivieren des weiteren Funktionsmodus durch die Axialbewegung entsprechend erfassen zu können, ist vorgesehen, dass an dem dem Drehknopf abgewandten Ende des Wellenelements zumindest ein Permanentmagnet angeordnet ist, dem ein dessen Bewegungen erfassbarer Sensor zugeordnet ist. Als Sensor kann vorzugsweise ein 3D-Sensor vorgesehen sein. Der Sensor ist derart gehäusefest angeordnet, dass der Sensor dem Permanentmagneten zugeordnet ist, sodass dieser die Bewegungen des mit dem Wellenelement verbundenen Permanentmagneten erfassen kann. Es sind auch andere Erfassungssysteme einsetzbar, die eine entsprechende Erfassung der Drehbewegung und der Axialbewegung des Wellenelements ermöglichen.

Nachfolgend wird die vorliegende Erfindung anhand der Zeichnungen weiter erläutert. Es zeigen:
Figur 1 eine schematische geschnittene Ansicht einer möglichen Ausführungsvariante einer erfindungsgemäßen Wählhebelanordnung in einer nicht gedrückten Position eines Drehknopfes;
Figur 2 eine schematische geschnittene Ansicht der Wählhebelanordnung in einer gedrückten Position des Drehknopfes;
Figur 3 eine schematische dreidimensionale Ansicht eines mit einem Scheibenelementes verbundenen Wellenelementes der erfindungsgemäßen Wählhebelanordnung;
Figur 4 eine Unteransicht der erfindungsgemäßen Wählhebelanordnung gemäß Figur 3;
Figur 5 eine dreidimensionale Einzelteilansicht des Wellenelementes der erfindungsgemäßen Wählhebelanordnung; und
Figur 6 eine Einzelteilansicht des Scheibenelementes der erfindungsgemäßen Wählhebelanordnung.

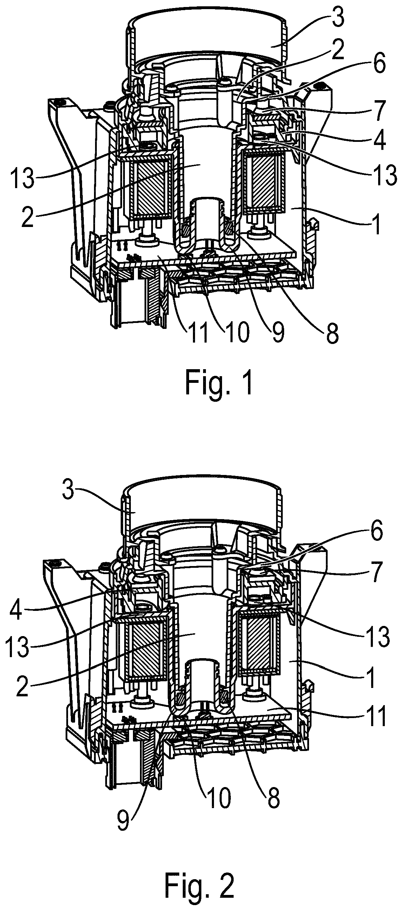

In den Figuren 1 bis 6 sind verschiedene Ansichten einer erfindungsgemäßen Wählhebelanordnung zum Anwählen und Schalten von verschiedenen Fahrmodi, wie zum Beispiel einem Parksperrenmodus, einem Rückwärtsfahrmodus, einem Neutralmodus, einem Automatikfahrmodus und weiteren Fahrmodi beispielhaft dargestellt.

Die Wählhebelanordnung umfasst ein Gehäuse 1 in dem ein Wellenelement 2 drehbar gelagert ist, an dem ein Drehknopf 3 befestigt ist. Die verschiedenen Fahrmodi sind dem Drehwinkelbereich des Wellenelementes 2 zugeordnet, sodass diese durch entsprechendes Drehen des Drehknopfes 3 von einem Fahrer anwählbar und damit schaltbar sind. Die Fahrmodi sind jeweils durch eine Rastierkontur für einen Fahrer wahrnehmbar voneinander getrennt. Die Drehbewegung des Wellenelementes 2 ist über eine Sperrkontur sperrbar.

Um die Funktionalität der Wählhebelanordnung zu erweitern, ist vorgesehen, dass das Wellenelement 2 mit einem Scheibenelement 4 drehfest, jedoch axial verschiebbar zum Aktivieren und Deaktivieren zumindest eines weiteren Funktionsmodus gekoppelt ist.

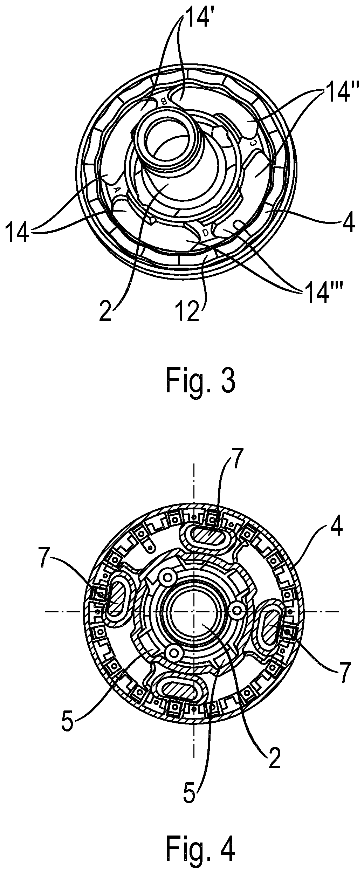

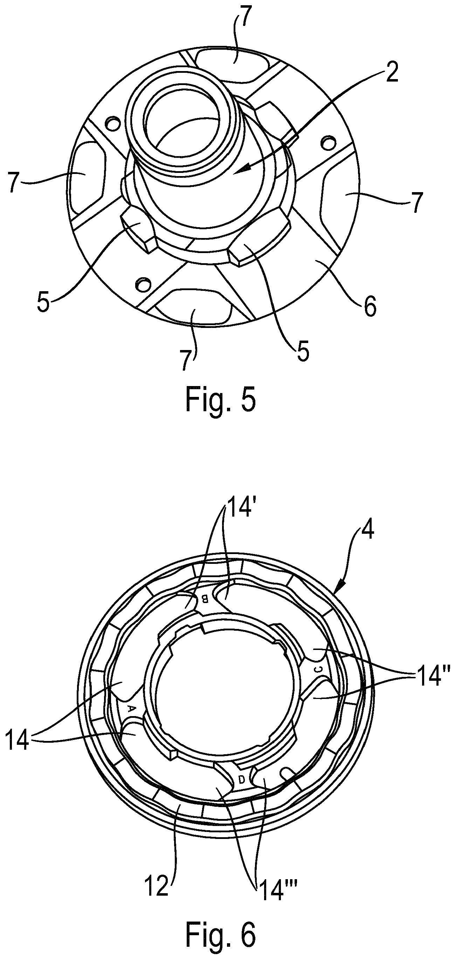

Wie insbesondere aus den Figuren 1 bis 5 ersichtlich ist, ist das Wellenelement 2 und das Scheibenelement 4 koaxial zueinander angeordnet. Zur drehfesten Befestigung ist eine Keilverzahnung 5 vorgesehen, die einerseits eine Drehsteifigkeit zwischen dem Wellenelement 2 und dem Scheibenelement 4 vorsieht und andererseits die axiale Verschiebbarkeit des Wellenelementes 2 bezogen auf das Scheibenelement 4 in dem Gehäuse 1 ermöglicht. Die Keilverzahnung 5 ist insbesondere aus Figur 4 und 5 ersichtlich.

Um die Wahrnehmbarkeit einer einzelnen Fahrmodi bei der Drehung des Wellenelementes 2 für den Fahrer zu erhöhen, ist vorgesehen, dass axial zwischen einem Bund 6 des Wellenelementes 2 und des Scheibenelementes 4 ein Haptikelement zum Erzeugen einer Haptik und zum Rückstellen der Axialbewegung des Wellenelementes 2 vorgesehen ist. Als Haptikelement ist eine Silikonschaltplatte 7 vorgesehen.

An dem dem Drehknopf 3 abgewandten Ende des Wellenelementes 2 ist zumindest ein Permanentmagnet 8 angeordnet. Das Wellenelement 2 ist mit dem Permanentmagneten 8 in einer gehäuseseitigen Aufnahme 9 axial geführt. Dem Permanentmagneten 8 an dem Ende des Wellenelementes 2 ist ein gehäuseseitig befestigter Sensor 10 zum Erfassen der Drehbewegung und der Axialbewegung des Wellenelementes 2 zugeordnet. Als Sensor 10 ist ein sogenannter 3D-Sensor vorgesehen, der gehäuseseitig auf einer Leiterplatte 11 angeordnet ist, um die Bewegungen des Wellenelementes 2 beziehungsweise des Permanentmagneten 8 sensieren zu können.

Die schematischen Ansichten der vorgeschlagenen Wählhebelanordnung gemäß Figur 1 und 2 zeigen unterschiedliche Betätigungszustände der Wählhebelanordnung. In Figur 1 ist der nicht gedrückte Zustand und in Figur 2 ist der axial gedrückte Zustand der vorgeschlagenen Wählhebelanordnung beispielhaft dargestellt. Gemäß Figuren 3 bis 6 sind das Wellenelement 2 und das Scheibenelement 4 der Wählhebelanordnung detaillierter dargestellt.

In Figur 3 und 4 wird der drehfest aber axial verschiebbare Zustand von Wellenelement 2 und Scheibenelement 4 verdeutlicht. Ferner ergibt sich aus den Einzelteilansichten von Wellenelement 2 und Scheibenelement 4 gemäß Figuren 5 und 6, dass das Scheibenelement 4 eine Rastierkontur und eine Sperrkontur aufweist. Als Rastierkontur ist eine an dem Umfang des Scheibenelementes 4 axial vorstehende wellenförmige Ringkontur 12 vorgesehen. Diese wellenförmige Ringkontur 12 steht mit einem nicht weiter dargestellten Rastierstift in Wirkkontakt, sodass eine entsprechende Haptik während der Drehbewegung für den Fahrer wahrnehmbar ist, um die verschiedenen Fahrmodi voneinander zu trennen.

Als Sperrkontur sind mehrere Anlage- beziehungsweise Anschlagbereiche A, B, C, D an dem Scheibenelement 4 vorgesehen, an denen zumindest ein gehäuseseitig befestigter und axial bewegbarer Sperrstift 13 zum Sperren der Drehbewegung des Wellenelementes 2 in Anlage bringbar ist. Die Anschlagbereiche A, B, C, D der Sperrkontur werden durch einander benachbarte Ausnehmungen 14, 14', 14", 14‴ an dem Scheibenelement 4 vorgesehen. Die Ausnehmungen 14, 14', 14", 14‴ sind beispielhaft als Ringsegmente an dem Scheibenelement 4 vorgesehen, sodass zwischen benachbarten Ausnehmungen 14, 14', 14", 14‴ jeweils ein Anschlagbereich A, B, C, D gebildet wird.

Zwei beispielhaft dargestellte Sperrstifte 13 sind in den Figuren 1 und 2 dargestellt. Durch entsprechende axiale Bewegung werden diese in Anlage an die Anschlagbereiche A, B, C, D gebracht, sodass die Drehbewegung des Scheibenelementes 4 und damit auch des Wellenelementes 2 blockiert wird.

Die Sperrstifte 13 sind gehäuseseitig axial bewegbar gelagert. Über eine Feder sind diese vorgespannt und können durch zum Beispiel eine magnetische Betätigung axial derart bewegt werden, dass der jeweilige Sperrstift 13 in Anlage an den Anschlagbereich A, B, C, D gebracht wird, sodass die Drehbewegung des Wellenelementes 2 in zum Beispiel eine Drehrichtung gesperrt wird. Wenn zum Beispiel eine Sperrung der Drehbewegung des Wellenelementes 2 in beide Drehrichtungen erfolgen soll, wird in Verbindung mit mehreren Sperrstiften 7, die an verschiedenen Anschlagbereichen A, B, C, D anliegen, die Drehbewegung des Wellenelementes 2 in beide Drehrichtungen gesperrt, um beispielsweise einen bestimmten Fahrmodus nicht verlassen zu können, auch wenn der Fahrer es durch eine entsprechende Kraftaufbringung an dem Drehknopf 3 des Wellenelementes 2 versucht. Die Drehbewegung des Wellenelementes 2 ist somit durch die aktivierten Sperrstifte 13 an den Anschlagbereichen A, B, C, D gesperrt. Sobald die Sperrung aufgehoben werden soll, werden die Sperrstifte 13 axial zurückgeführt und liegen somit nicht mehr an den Anschlagbereichen A, B, C, D an. Demzufolge kann das Wellenelement 2 durch den Fahrer wieder frei bewegt werden.

### Bezugszeichen

- 1: Gehäuse
- 2: Wellenelement
- 3: Drehknopf
- 4: Scheibenelement
- 5: Keilverzahnung
- 6: Bund
- 7: Silikonschaltplatte
- 8: Permanentmagnet
- 9: Aufnahme
- 10: Sensor
- 11: Leiterplatte
- 12: Ringkontur
- 13: Sperrstift
- 14, 14', 14", 14‴: Ausnehmungen
- A,B,C,D: Anlage- beziehungsweise Anschlagbereich

## Patentansprüche

1. Wählhebelanordnung zum Anwählen und Schalten von verschiedenen Fahrmodi bei einem Fahrzeuggetriebe, mit einem Drehknopf (3), der mit einem in einem Gehäuse (1) drehbar gelagerten und axial geführten Wellenelement (2) verbunden ist, wobei die Fahrmodi dem Drehwinkelbereich des Wellenelementes (2) zugeordnet sind und jeweils durch eine Rastierkontur für einen Fahrer wahrnehmbar voneinander getrennt sind und wobei die Drehbewegung des Wellenelementes (2) über eine Sperrkontur sperrbar ist, wobei das Wellenelement (2) mit einem Scheibenelement (4) drehfest jedoch axial verschiebbar zum Aktivieren und Deaktivieren zumindest eines weiteren Funktionsmodus gekoppelt ist um die Funktionalität der besagten Wählhebelanordnung durch axiales Bewegen des Drehknopfes zu erweitern,
**dadurch gekennzeichnet, dass** das Scheibenelement (4) die Rastierkontur und die Sperrkontur aufweist, wobei als Rastierkontur eine an dem Umfangsbereich des Scheibenelementes (4) axial vorstehende wellenförmige Ringkontur (12) vorgesehen ist.

2. Wählhebelanordnung nach Anspruch 1, **dadurch gekennzeichnet, dass** das Wellenelement (2) und das Scheibenelement (4) koaxial zueinander angeordnet sind und über eine Keilverzahnung (5) axial verschiebbar miteinander drehfest verbunden sind.

3. Wählhebelanordnung nach Anspruch 1 oder 2, **dadurch gekennzeichnet, dass** axial zwischen einem Bund (6) des Wellenelementes (2) und des Scheibenelementes (4) ein Haptikelement zum Erzeugen einer Haptik und zum Rückstellen der Axialbewegung des Wellenelementes (2) vorgesehen ist.

4. Wählhebelanordnung nach Anspruch 3, **dadurch gekennzeichnet, dass** als Haptikelement eine Silikonschaltplatte (7) vorgesehen ist.

5. Wählhebelanordnung nach einem der vorangehenden Ansprüche, **dadurch gekennzeichnet, dass** an dem dem Drehknopf (3) abgewandten Ende des Wellenelementes (2) zumindest ein Permanentmagnet (8) angeordnet ist.

6. Wählhebelanordnung nach Anspruch 5 , **dadurch gekennzeichnet, dass** das Wellenelement (2) mit dem zumindest einen Permanentmagneten (8) in einer gehäuseseitiger Aufnahme (9) axial geführt ist.

7. Wählhebelanordnung nach Anspruch 5 oder 6, **dadurch gekennzeichnet, dass** dem zumindest einen Permanentmagnet (8) an dem Ende des Wellenelementes (2) ein gehäuseseitig befestigter Sensor (10) zum Erfassen der Drehbewegung und der Axialbewegung des Wellenelementes (2) zugeordnet ist.

8. Wählhebelanordnung nach einem der vorhergehenden Ansprüche, **dadurch gekennzeichnet, dass** als Sperrkontur mehrere Anschlagbereiche (A, B, C, D) an dem Scheibenelement (4) vorgesehen sind, an denen jeweils zumindest ein gehäuseseitig befestigter und axial bewegbarer Sperrstift (13) zum Sperren der Drehbewegung des Wellenelementes (2) in Anlage bringbar ist.

9. Wählhebelanordnung nach Anspruch 8, **dadurch gekennzeichnet, dass** jeder Anschlagbereich (A, B, C, D) durch einander benachbarte Ausnehmungen (14, 14`, 14", 14‴) an dem Scheibenelement (4) vorgesehen ist.

## Claims

1. Selector lever assembly for selecting and switching different driving modes in a vehicle transmission, having a rotary knob (3), which is connected to an axially guided shaft element (2) rotatably mounted in a housing (1), wherein the driving modes are assigned to the rotational angle range of the shaft element (2) and are each separated from one another by a latching contour that is perceptible by a driver, and wherein the rotational movement of the shaft element (2) can be blocked via a blocking contour,
wherein the shaft element (2) is co-rotationally but axially displaceably coupled with a disc element (4) for activating and deactivating at least one further function mode, in order to expand the functionality of the aforesaid selector lever assembly by means of moving the rotary knob axially,
**characterized in that** the disc element (4) has the latching contour and the blocking contour, wherein a wave-shaped annular contour (12) protruding axially on the circumferential region of the disc element (4) is provided as a latching contour.

2. Selector lever assembly according to Claim 1, **characterized in that** the shaft element (2) and the disc element (4) are arranged coaxially with each other and are co-rotationally connected to each other via a spline (5) so as to be axially displaceable.

3. Selector lever assembly according to Claim 1 or 2, **characterized in that** a haptic element for producing a tactile feeling and for resetting the axial movement of the shaft element (2) is provided axially between a shoulder (6) of the shaft element (2) and the disc element (4) .

4. Selector lever assembly according to Claim 3, **characterized in that** a silicone switch plate (7) is provided as the haptic element.

5. Selector lever assembly according to one of the preceding claims, **characterized in that** at least one permanent magnet (8) is provided at the end of the shaft element (2) that faces away from the rotary knob (3).

6. Selector lever assembly according to Claim 5, **characterized in that** the shaft element (2) having the at least one permanent magnet (8) is guided axially in a recess (9) in the housing.

7. Selector lever assembly according to Claim 5 or 6, **characterized in that** the at least one permanent magnet (8) at the end of the shaft element (2) is assigned a sensor (10) fixed to the housing for detecting the rotational movement and the axial movement of the shaft element (2).

8. Selector lever assembly according to one of the preceding claims, **characterized in that** a plurality of stop regions (A, B, C, D) are provided on the disc element (4) as a blocking contour, with each of which at least one blocking pin (13) that is fixed to the housing and can be moved axially can be brought into contact in order to block the rotational movement of the shaft element (2) .

9. Selector lever assembly according to Claim 8, **characterized in that** each stop region (A, B, C, D) is provided by cutouts (14, 14', 14", 14‴) adjacent to one another on the disc element (4).

## Revendications

1. Agencement de levier de sélection pour la sélection et le changement entre différents modes de conduite dans une boîte de vitesses de véhicule, avec un bouton rotatif (3), qui est relié à un élément d'arbre monté de manière rotative dans un boîtier (1) et guidé axialement, les modes de conduite étant associés à la plage d'angles de rotation de l'élément d'arbre (2) et étant séparés les uns des autres de manière perceptible pour un conducteur par un contour d'encliquetage, et le mouvement de rotation de l'élément d'arbre (2) pouvant être bloqué par un contour de blocage, l'élément d'arbre (2) étant accouplé à un élément de disque (4) de manière solidaire en rotation mais axialement mobile pour activer et désactiver au moins un autre mode de fonctionnement afin d'étendre la fonctionnalité dudit agencement de levier de sélection par un déplacement axial du bouton rotatif, **caractérisé en ce que** l'élément de disque (4) présente le contour d'encliquetage et le contour de blocage, un contour annulaire (12) de forme ondulée faisant saillie axialement sur la zone périphérique de l'élément de disque (4) étant prévu en tant que contour d'encliquetage.

2. Agencement de levier de sélection selon la revendication 1, **caractérisé en ce que** l'élément d'arbre (2) et l'élément de disque (4) sont agencés coaxialement l'un par rapport à l'autre et sont reliés de manière solidaire en rotation l'un à l'autre de manière axialement mobile par l'intermédiaire d'une denture conique (5).

3. Agencement de levier de sélection selon la revendication 1 ou 2, **caractérisé en ce qu'**un élément haptique est prévu axialement entre une collerette (6) de l'élément d'arbre (2) et l'élément de disque (4) pour produire un effet haptique et pour la réinitialisation du mouvement axial de l'élément d'arbre (2).

4. Agencement de levier de sélection selon la revendication 3, **caractérisé en ce qu'**une plaque de commutation en silicone (7) est prévue en tant qu'élément haptique.

5. Agencement de levier de sélection selon l'une quelconque des revendications précédentes, **caractérisé en ce qu'**au moins un aimant permanent (8) est agencé à l'extrémité de l'élément d'arbre (2) détournée du bouton rotatif (3).

6. Agencement de levier de sélection selon la revendication 5, **caractérisé en ce que** l'élément d'arbre (2) est guidé axialement avec l'au moins un aimant permanent (8) dans un logement (9) du côté du boîtier.

7. Dispositif de levier de sélection selon la revendication 5 ou 6, **caractérisé en ce que** l'au moins un aimant permanent (8) à l'extrémité de l'élément d'arbre (2) est associé à un capteur (10) fixé du côté du boîtier pour détecter le mouvement de rotation et le mouvement axial de l'élément d'arbre (2).

8. Agencement de levier de sélection selon l'une quelconque des revendications précédentes, **caractérisé en ce que** plusieurs zones de butée (A, B, C, D) sont prévues sur l'élément de disque (4) en tant que contour de blocage, sur lesquelles au moins une goupille de blocage (13) fixée du côté du boîtier et mobile axialement peut être mise en application pour bloquer le mouvement de rotation de l'élément d'arbre (2).

9. Agencement de levier de sélection selon la revendication 8, **caractérisé en ce que** chaque zone de butée (A, B, C, D) est prévue par des évidements (14, 14', 14'', 14''') voisins les uns des autres sur l'élément de disque (4).
